# EUROPÄISCHE PATENTANMELDUNG

(11) **EP 4 821 713 A1**
(43) Veröffentlichungstag der Anmeldung: **14.10.2026**
(21) Anmeldenummer: 26164620.2
(22) Anmeldetag: 13.03.2026
(51) Int. Cl.: B60H 1/00, F02D 9/10

(54) **VORRICHTUNG UND VERFAHREN ZUR EINSTELLUNG EINER LUFTMENGE IN EINEM LUFTKANAL**

(30) Priorität: 11.04.2025 DE 102025114437
(71) Anmelder: Siemens Mobility GmbH, 80997 München (DE)
(72) Erfinder: Kasap, Irfan, 47829 Krefeld (DE); Plinninger, Thomas, 47829 Krefeld (DE)
(74) Vertreter: Siemens Patent Attorneys

(57) **Zusammenfassung**

Die Erfindung betrifft eine Luftklappenvorrichtung 10 zur Regelung einer Luftmenge in einem Luftkanal 11, umfassend eine drehbare Klappe 12, einen Stellantrieb 14 zum Einstellen eines Öffnungswinkels α der Klappe 12, und mindestens ein Strömungselement 15, welches derart im Luftkanal 11 ausgebildet ist, dass eine im Wesentlichen lineare Kennlinie zwischen dem Öffnungswinkel α der Klappe 12 und der resultierenden Luftmenge erzeugt wird.

## Beschreibung

Die vorliegende Erfindung betrifft eine Luftklappenvorrichtung zur Einstellung einer Luftmenge in einem Luftkanal, vorzugsweise eines Klimatisierungssystems eines spurgeführten Fahrzeugs des Personentransports.

Die Erfindung betrifft ferner ein Klimatisierungssystem umfassend zumindest eine solche Luftklappenvorrichtung.

Die Erfindung betrifft ferner ein spurgeführtes Fahrzeug des Personentransports, umfassend zumindest eine solche Luftklappenvorrichtung oder zumindest ein solches Klimatisierungssystem.

Ferner betrifft die vorliegende Erfindung ein Verfahren zur Einstellung einer Luftmenge in einem Luftkanal, vorzugsweise eines Klimatisierungssystems eines spurgeführten Fahrzeugs des Personentransports.

Die Erfindung betrifft ferner ein Computerprogrammprodukt mit Programmcode, der auf einem computerlesbaren Medium gespeichert ist und der, wenn er auf mindestens einem Prozessor ausgeführt wird, ein solches Verfahren ausführt.

Die Erfindung betrifft ferner ein computerlesbares Medium mit einem darauf gespeicherten Computerprogrammprodukt, welches Programmcode umfasst, der bei Ausführung durch mindestens einen Prozessor veranlasst ein solches Verfahren auszuführen.

Die Erfindung betrifft ferner einen digitalen Zwilling einer Luftklappenvorrichtung zur Einstellung einer Luftmenge in einem Luftkanal, eines Klimatisierungssystems und/oder eines spurgeführten Fahrzeugs, wobei der digitale Zwilling zumindest ein digitales Modell einer solchen, der Luftklappenvorrichtung oder einem Klimatisierungssystem mit einer solchen Luftklappenvorrichtung oder eines spurgeführten Fahrzeugs mit einer solchen Luftklappenvorrichtung, umfasst.

Luftklappensysteme werden insbesondere in Luftkanälen von Klimatisierungssystemen von spurgeführten Fahrzeugen eingesetzt, um den Durchfluss von Luft zu steuern. Herkömmliche Luftklappen weisen eine nichtlineare Kennlinie auf, die das Verhältnis zwischen dem Öffnungswinkel der Klappe und der resultierenden Luftdurchflussmenge darstellt. Bei konventionellen Klappen führen geringe Änderungen des Öffnungswinkels im unteren Winkelbereich zu überproportionalen Änderungen des Luftdurchflusses, während im Bereich größerer Öffnungswinkel die Änderung des Luftdurchflusses unterproportional zum Öffnungswinkel ist.

Diese nichtlinearen Charakteristiken werden typischerweise durch Stellmotoren wie Klappenantrieben angesteuert, die jedoch fertigungsbedingte Toleranzen aufweisen. Diese Toleranzen führen in Kombination mit der nichtlinearen Klappenkennlinie zu Problemen bei der präzisen und reproduzierbaren Einstellung bestimmter Luftmengen, insbesondere in den Bereichen, in denen die Kennlinie starke Nichtlinearitäten aufweist.

Das Hauptproblem bei konventionellen Luftklappensystemen liegt in der inhärent nichtlinearen Beziehung zwischen dem Klappenöffnungswinkel und dem resultierenden Luftdurchfluss. Diese Nichtlinearität führt zu folgenden technischen Nachteilen:
1. Bei kleinen Öffnungswinkeln bewirken bereits geringfügige Änderungen des Stellwinkels erhebliche Schwankungen in der Luftmenge, was eine feinfühlige Regelung in diesem Bereich erschwert.
2. Bei größeren Öffnungswinkeln ist die Steuerung der Luftmenge ungenau, da erhebliche Winkeländerungen erforderlich sind, um merkliche Änderungen des Luftdurchflusses zu erzielen.
3. Fertigungstoleranzen und Ungenauigkeiten von Stellmotoren verstärken die Problematik der präzisen Einstellung, was zu einer mangelnden Reproduzierbarkeit der gewünschten Luftmengen führt.
4. Die nichtlineare Charakteristik erschwert die automatisierte Steuerung und führt zu ineffizienten Betriebszuständen mit erhöhtem Energieverbrauch.

Diese Problematik ist besonders relevant bei Klimatisierungssystemen von spurgeführten Fahrzeugen des Personentransports, wo der begrenzte Einbauraum und die hohen Anforderungen an den Passagierkomfort eine präzise Luftmengensteuerung erfordern.

Ausgehend davon liegt der Erfindung die Aufgabe zugrunde, eine Luftklappenvorrichtung zu schaffen, die ein proportionales Verhältnis zwischen Klappenöffnungswinkel und resultierender Luftdurchflussmenge ermöglicht.

Diese Aufgabe wird durch eine Luftklappenvorrichtung gemäß Anspruch 1 gelöst. Ferner wird diese Aufgabe durch ein Klimatisierungssystem nach Anspruch 11 gelöst. Ferner wird diese Aufgabe durch ein spurgeführtes Fahrzeug nach Anspruch 12 gelöst. Weiterhin wird dieses Problem durch ein Verfahren zur Luftmengenregelung gemäß Anspruch 13 gelöst. Ferner wird diese Aufgabe durch das Computerprogrammprodukt nach Anspruch 23 gelöst. Ferner wird diese Aufgabe durch das computerlesbare Medium nach Anspruch 24 gelöst. Außerdem wird diese Aufgabe durch den digitalen Zwilling nach Anspruch 25 gelöst. Vorteilhafte Ausführungsformen und Weiterbildungen sind Gegenstand der abhängigen Ansprüche.

Die Erfindung betrifft eine Luftklappenvorrichtung zur Einstellung einer Luftmenge in einem Luftkanal, vorzugsweise eines Klimatisierungssystems eines spurgeführten Fahrzeugs des Personentransports, wobei die Luftklappenvorrichtung eine innerhalb des Luftkanals angeordnete drehbare Klappe, einen Stellantrieb zum Einstellen eines Öffnungswinkels der Klappe, und mindestens ein Strömungselement zum Beeinflussen des Strömungsverhaltens umfasst, welches derart im Luftkanal ausgebildet ist, dass eine im Wesentlichen lineare Kennlinie zwischen dem Öffnungswinkel der Klappe und der resultierenden Luftmenge über einen vorbestimmten Winkelbereich des Öffnungswinkels ausgebildet ist.

Die Erfindung betrifft weiterhin ein Klimatisierungssystem, umfassend zumindest eine solche oder wie nachfolgend beschrieben, weitergebildete Luftklappenvorrichtung.

Die Erfindung betrifft außerdem ein spurgeführtes Fahrzeug des Personentransports, umfassend zumindest eine solche oder wie nachfolgend beschrieben, weitergebildete Luftklappenvorrichtung oder zumindest ein solches oder wie nachfolgend beschrieben, weitergebildetes Klimatisierungssystem.

Die Erfindung betrifft weiterhin ein Verfahren zur Einstellung einer Luftmenge in einem Luftkanal, vorzugsweise eines Klimatisierungssystems eines spurgeführten Fahrzeugs des Personentransports, umfassend die Schritte des Einstellens eines Öffnungswinkels einer innerhalb des Luftkanals angeordneten drehbaren Klappe mittels eines Stellantriebs, und des Beeinflussens des Strömungsverhaltens der Luft im Bereich der Klappe durch mindestens ein im Luftkanal ausgebildetes Strömungselement, sodass eine im Wesentlichen lineare Kennlinie zwischen dem Öffnungswinkel der Klappe und der resultierenden Luftmenge über einen vorbestimmten Winkelbereich des Öffnungswinkels ausgebildet wird.

Die Erfindung betrifft weiterhin ein Computerprogrammprodukt mit Programmcode, der auf einem computerlesbaren Medium gespeichert ist und der, wenn er auf mindestens einem Prozessor ausgeführt wird, das Verfahren ausführt.

Die Erfindung betrifft weiterhin ein computerlesbares Medium mit einem darauf gespeicherten Computerprogrammprodukt, welches Programmcode umfasst, der bei Ausführung durch mindestens einen Prozessor veranlasst, das Verfahren auszuführen.

Die Erfindung betrifft weiterhin einen digitalen Zwilling einer Luftklappenvorrichtung zur Einstellung einer Luftmenge in einem Luftkanal, eines Klimatisierungssystems und/oder eines spurgeführten Fahrzeugs, wobei der digitale Zwilling zumindest ein digitales Modell der Luftklappenvorrichtung und/oder ein Modell des Klimatisierungssystems und/oder ein Modell des spurgeführten Fahrzeugs umfasst.

Das technische Problem der nichtlinearen Klappenkennlinie und der daraus resultierenden mangelnden Präzision bei der Luftmengenregelung wird durch die erfindungsgemäße Luftklappenvorrichtung gelöst, indem die Strömungsverhältnisse im Bereich der Klappe gezielt so beeinflusst werden, dass ein linearer Zusammenhang zwischen Klappenöffnungswinkel und resultierender Luftmenge entsteht. Dies ermöglicht eine gleichmäßige Steuerungsgenauigkeit über den gesamten Öffnungsbereich der Klappe.

Der Hauptvorteil der erfindungsgemäßen Lösung besteht darin, dass eine präzise und reproduzierbare Regelung der Luftmenge über den gesamten Betriebsbereich der Klappe ermöglicht wird, was zu einer verbesserten Effizienz, erhöhter Genauigkeit und reduzierten Betriebskosten führt. Insbesondere werden die negativen Auswirkungen von Stellmotortoleranzen minimiert, da ein lineares Ansprechverhalten über den gesamten Arbeitsbereich gewährleistet ist.

Diese Vorteile sind besonders wichtig für Klimatisierungssysteme von spurgeführten Fahrzeugen des Personentransports, wo der Passagierkomfort und die Energieeffizienz von großer Bedeutung sind.

Durch die erfindungsgemäße Lösung wird erreicht, dass über den gesamten Betriebsbereich eine präzisere und reproduzierbarere Luftmengenregelung auch bei vorhandenen Stellmotortoleranzen vorliegt.

Die Integration der erfindungsgemäßen Luftklappenvorrichtung in ein Klimatisierungssystem ermöglicht eine präzise Steuerung der Luftströme und eine verbesserte Effizienz des Gesamtsystems.

Die Anwendung der erfindungsgemäßen Luftklappenvorrichtung oder des Klimatisierungssystems in einem spurgeführten Fahrzeug verbessert den Passagierkomfort, optimiert den Energieverbrauch und erhöht die Zuverlässigkeit des Klimatisierungssystems unter den spezifischen Betriebsbedingungen eines Schienenfahrzeugs.

Das Computerprogrammprodukt umfasst insbesondere Programmcode zum Bestimmen einer Stellposition des Öffnungswinkels der Klappe in Abhängigkeit einer gewünschten Luftmenge, zum Ansteuern eines Stellantriebs zur Einstellung des bestimmten Öffnungswinkels, zum Erfassen von Sensordaten hinsichtlich eines Differenzdrucks und zum Ansteuern von konfigurierbaren Strömungselementen.

Der digitale Zwilling ermöglicht die virtuelle Entwicklung und Optimierung der Luftklappenvorrichtung, des Klimatisierungssystems und/oder des spurgeführten Fahrzeugs vor der physischen Realisierung und unterstützt somit den Entwicklungsprozess.

Gemäß einer vorteilhaften Ausgestaltung der Luftklappenvorrichtung umfasst das mindestens eine Strömungselement zumindest ein Strömungsleitbauteil, das in einem vorbestimmten Abstand zur Klappe angeordnet ist.

Der Vorteil dieser Ausgestaltung liegt darin, dass die Strömungsleitbauteile die Strömungscharakteristik gezielt beeinflussen können, um die gewünschte Linearität zu erreichen.

Gemäß einer weiteren vorteilhaften Ausgestaltung der Luftklappenvorrichtung weist das zumindest eine Strömungsleitbauteil, vorzugsweise die mehreren Strömungsleitbauteile, unterschiedliche Formen, Größen und/oder Abstände zueinander auf, die vorzugsweise auf Basis von Strömungssimulationen oder empirischen Tests zur Erzielung der linearen Kennlinie optimiert sind.

Diese Anpassung ermöglicht eine präzise Feinabstimmung der Strömungscharakteristik.

Gemäß einer weiteren vorteilhaften Ausgestaltung der Luftklappenvorrichtung ist das mindestens eine Strömungselement als ein strukturiertes Oberflächenelement ausgebildet, das an der Innenwand des Luftkanals angebracht ist.

Diese Ausgestaltung bietet den Vorteil einer kompakten Bauweise und einer einfachen Nachrüstbarkeit in bestehende Systeme.

Gemäß einer weiteren vorteilhaften Ausgestaltung der Luftklappenvorrichtung weist die Klappe und/oder das Strömungselement eine gegenüber dem Luftkanal modifizierte Oberflächenkontur auf, die zur Erzeugung der linearen Kennlinie ausgebildet ist.

Diese direkte Modifikation der Klappe selbst und/oder des Strömungselements ermöglicht eine besonders effiziente Linearisierung.

Gemäß einer weiteren vorteilhaften Ausgestaltung der Luftklappenvorrichtung ist das mindestens eine Strömungselement konfigurierbar, um die Linearität der Kennlinie an unterschiedliche Betriebsbedingungen anzupassen.

Dieser adaptive Ansatz erhöht die Flexibilität und Anwendbarkeit des Systems unter verschiedenen Betriebsbedingungen.

Gemäß einer weiteren vorteilhaften Ausgestaltung der Luftklappenvorrichtung umfasst die Luftklappenvorrichtung eine Steuerungseinheit, die konfiguriert ist, den Öffnungswinkel der Klappe einzustellen; und/oder einen Drucksensor zur Erfassung eines Differenzdrucks über die Klappe, wobei vorzugsweise die Steuerungseinheit konfiguriert ist, den Öffnungswinkel der Klappe in Abhängigkeit vom erfassten Differenzdruck einzustellen.

Diese Rückkopplungsschleife ermöglicht eine noch präzisere Regelung und eine kontinuierliche Anpassung an sich ändernde Bedingungen.

Gemäß einer weiteren vorteilhaften Ausgestaltung der Luftklappenvorrichtung ist die Steuerungseinheit konfiguriert, eine Selbstkalibrierungsroutine durchzuführen, um die tatsächliche Kennlinie zu erfassen und den Stellantrieb entsprechend einzustellen.

Diese automatische Kalibrierung erhöht die Genauigkeit und reduziert den Wartungsaufwand.

Gemäß einer weiteren vorteilhaften Ausgestaltung der Luftklappenvorrichtung umfasst das mindestens eine Strömungselement ein Element, vorzugsweise ein verformbares Element, dessen Geometrie zur dynamischen Anpassung der Kennlinie während des Betriebs veränderbar ist.

Die dynamische Anpassungsfähigkeit ermöglicht eine optimale Leistung unter wechselnden Betriebsbedingungen.

Gemäß einer weiteren vorteilhaften Ausgestaltung der Luftklappenvorrichtung ist das mindestens eine Strömungselement stromaufwärts und/oder stromabwärts der Klappe angeordnet.

Diese flexible Positionierung ermöglicht eine optimale Anpassung an verschiedene Einbausituationen.

Gemäß einer vorteilhaften Ausgestaltung des Verfahrens erfolgt das Beeinflussen des Strömungsverhaltens mittels des mindestens einen Strömungselements durch zumindest ein Strömungsleitbauteil, das in einem vorbestimmten Abstand zur Klappe angeordnet ist.

Dies ermöglicht eine gezielte Beeinflussung der Strömung zur Erreichung der linearen Kennlinie.

Gemäß einer weiteren vorteilhaften Ausgestaltung des Verfahrens weist das zumindest eine Strömungsleitbauteil, vorzugsweise die mehreren Strömungsleitbauteile, unterschiedliche Formen, Größen und/oder Abstände zueinander auf, die vorzugsweise auf Basis von Strömungssimulationen oder empirischen Tests zur Erzielung der linearen Kennlinie optimiert sind.

Diese optimierte Konfiguration trägt wesentlich zur Linearisierung bei.

Gemäß einer weiteren vorteilhaften Ausgestaltung des Verfahrens erfolgt das Beeinflussen des Strömungsverhaltens mittels des mindestens einen Strömungselements durch ein als strukturiertes Oberflächenelement ausgebildetes Element, das an der Innenwand des Luftkanals angebracht ist.

Diese platzsparende Lösung ist besonders für die beengten Platzverhältnisse in Fahrzeugen geeignet.

Gemäß einer weiteren vorteilhaften Ausgestaltung des Verfahrens erfolgt das Beeinflussen des Strömungsverhaltens mittels der Klappe und/oder des Strömungselements, die eine gegenüber dem Luftkanal modifizierte Oberflächenkontur aufweisen, die zur Erzeugung der linearen Kennlinie ausgebildet ist.

Diese integrierte Lösung vereinfacht die Konstruktion.

Gemäß einer weiteren vorteilhaften Ausgestaltung des Verfahrens umfasst das Verfahren ferner einen Schritt des Konfigurierens des mindestens einen Strömungselements, um die Linearität der Kennlinie an unterschiedliche Betriebsbedingungen anzupassen.

Diese Anpassungsfähigkeit erhöht die Flexibilität des Systems.

Gemäß einer weiteren vorteilhaften Ausgestaltung des Verfahrens umfasst das Verfahren ferner das Steuern des Öffnungswinkels der Klappe mittels einer Steuerungseinheit; und/oder das Erfassen eines Differenzdrucks über die Klappe mittels eines Drucksensors, wobei vorzugsweise der Öffnungswinkel der Klappe in Abhängigkeit vom erfassten Differenzdruck eingestellt wird.

Diese Regelungsstrategie ermöglicht eine präzise Anpassung an die gewünschten Luftmengen.

Gemäß einer weiteren vorteilhaften Ausgestaltung des Verfahrens umfasst das Verfahren ferner einen Schritt des Durchführens einer Selbstkalibrierungsroutine mittels der Steuerungseinheit, um die tatsächliche Kennlinie zu erfassen und den Stellantrieb entsprechend einzustellen.

Die Selbstkalibrierung erhöht die Genauigkeit und Zuverlässigkeit des Systems.

Gemäß einer weiteren vorteilhaften Ausgestaltung des Verfahrens erfolgt das Beeinflussen des Strömungsverhaltens mittels des mindestens einen Strömungselements durch ein Element, vorzugsweise ein verformbares Element, dessen Geometrie zur dynamischen Anpassung der Kennlinie während des Betriebs veränderbar ist.

Diese aktive Anpassung ermöglicht eine kontinuierliche Optimierung der Kennlinie.

Gemäß einer weiteren vorteilhaften Ausgestaltung des Verfahrens erfolgt das Beeinflussen des Strömungsverhaltens mittels des mindestens einen Strömungselements stromaufwärts und/oder stromabwärts der Klappe.

Diese flexible Positionierung ermöglicht eine optimale Anpassung an verschiedene Einbausituationen.

Gemäß einer vorteilhaften Ausgestaltung des digitalen Zwillings umfasst dieser ein digitales Modell einer innerhalb des Luftkanals angeordneten drehbaren Klappe, ein digitales Modell eines Stellantriebs zum Einstellen eines Öffnungswinkels der Klappe, und ein digitales Modell von mindestens einem Strömungselement, welches derart im digitalen Modell des Luftkanals angeordnet ist, dass eine im Wesentlichen lineare Kennlinie zwischen dem Öffnungswinkel der Klappe und der resultierenden Luftmenge über einen vorbestimmten Winkelbereich des Öffnungswinkels simuliert wird.

Diese detaillierte virtuelle Nachbildung ermöglicht präzise Simulationen und Vorhersagen.

Gemäß einer weiteren vorteilhaften Ausgestaltung des digitalen Zwillings umfasst dieser eine Simulationseinheit, die konfiguriert ist, Strömungssimulationen durchzuführen, um die Auswirkungen von Änderungen an der Geometrie, Position oder Konfiguration des mindestens einen Strömungselements auf die Linearität der Kennlinie zu analysieren; und/oder eine Optimierungseinheit, die konfiguriert ist, basierend auf den Simulationsergebnissen eine optimale Konfiguration des mindestens einen Strömungselements zu bestimmen, um die lineare Kennlinie für unterschiedliche Betriebsbedingungen zu maximieren und Ergebnisse zur Verwendung bei der physischen Implementierung der Luftklappenvorrichtung bereitzustellen.

Diese Simulationsfähigkeiten unterstützen die Entwicklung und Optimierung der realen Vorrichtung erheblich.

Im Sinne der vorliegenden Erfindung wird unter einer "linearen Kennlinie" ein im Wesentlichen proportionales Verhältnis zwischen dem Öffnungswinkel der Klappe und der resultierenden Luftmenge verstanden, wobei geringfügige Abweichungen von einer perfekten Linearität im Rahmen der technischen Umsetzbarkeit toleriert werden.

Unter "Strömungselement" wird jede Struktur verstanden, die gezielt zur Beeinflussung des Strömungsverhaltens der Luft im Bereich der Klappe eingesetzt wird, um die gewünschte Linearisierung der Kennlinie zu erreichen.

Unter "Strömungsleitbauteil" wird ein spezifisches Strömungselement verstanden, das die Luftströmung durch seine Form und Position gezielt leitet und beeinflusst.

Unter "strukturiertes Oberflächenelement" wird ein Strömungselement verstanden, das durch eine spezifische Oberflächenstruktur die Strömungseigenschaften beeinflusst.

Unter "Klappenöffnungswinkel" wird der Winkel verstanden, den die Klappe zur geschlossenen Position einnimmt, wobei ein Winkel von 0° einer vollständig geschlossenen Klappe und ein Winkel von 90° einer vollständig geöffneten Klappe entspricht.

Unter "digitalem Zwilling" wird ein virtuelles Modell der physischen Luftklappenvorrichtung, des Klimatisierungssystems und/oder des spurgeführten Fahrzeugs verstanden, das deren Verhalten unter verschiedenen Bedingungen simulieren kann.

Unter "Klimatisierungssystem" wird ein System verstanden, das zur Regelung der Lufttemperatur, -feuchtigkeit und -qualität in einem geschlossenen Raum, insbesondere in einem spurgeführten Fahrzeug des Personentransports, dient und mindestens eine Luftklappenvorrichtung zur Steuerung der Luftströme umfasst.

Unter "spurgeführtem Fahrzeug" im Sinne der vorliegenden Erfindung wird ein Fahrzeug verstanden, das auf Schienen oder anderen Führungssystemen fährt, insbesondere ein Personenzug, ein Hochgeschwindigkeitszug, eine Magnetschwebebahn, ein Regionalzug, eine Intercityzug, eine S-Bahn, eine Straßenbahn oder eine U-Bahn.

Soweit vorteilhafte Ausgestaltungen beschrieben sind, gelten diese für alle Anspruchskategorien. Im Folgenden wird ein Ausführungsbeispiel der Erfindung unter Bezugnahme auf die Zeichnungen beschrieben.
- Fig. 1: zeigt eine schematische Darstellung einer erfindungsgemäßen Luftklappenvorrichtung zur Einstellung einer Luftmenge in einem Luftkanal, vorzugsweise eines Klimatisierungssystems eines spurgeführten Fahrzeugs des Personentransports.
- Fig. 2: zeigt ein Diagramm, das eine konventionelle nichtlineare Klappenkennlinie darstellt, wobei die Beziehung zwischen dem Öffnungswinkel und dem Differenzdruck abgebildet ist.
- Fig. 3: zeigt ein Diagramm, das eine erfindungsgemäße optimierte lineare Klappenkennlinie darstellt, wobei die Beziehung zwischen dem Öffnungswinkel und dem Differenzdruck abgebildet ist.
- Fig. 4: zeigt ein Blockdiagramm eines Regelungskreises zur Steuerung der erfindungsgemäßen Luftklappenvorrichtung, umfassend eine Steuerungseinheit, einen Drucksensor, einen Stellantrieb und eine Klappe.
- Fig. 5: zeigt eine schematische Darstellung eines spurgeführten Fahrzeugs des Personentransports, das mit einem Klimatisierungssystem ausgestattet ist, welches mindestens eine erfindungsgemäße Luftklappenvorrichtung umfasst.
- Fig. 6: zeigt ein Flussdiagramm des erfindungsgemäßen Verfahrens zur Einstellung einer Luftmenge in einem Luftkanal.

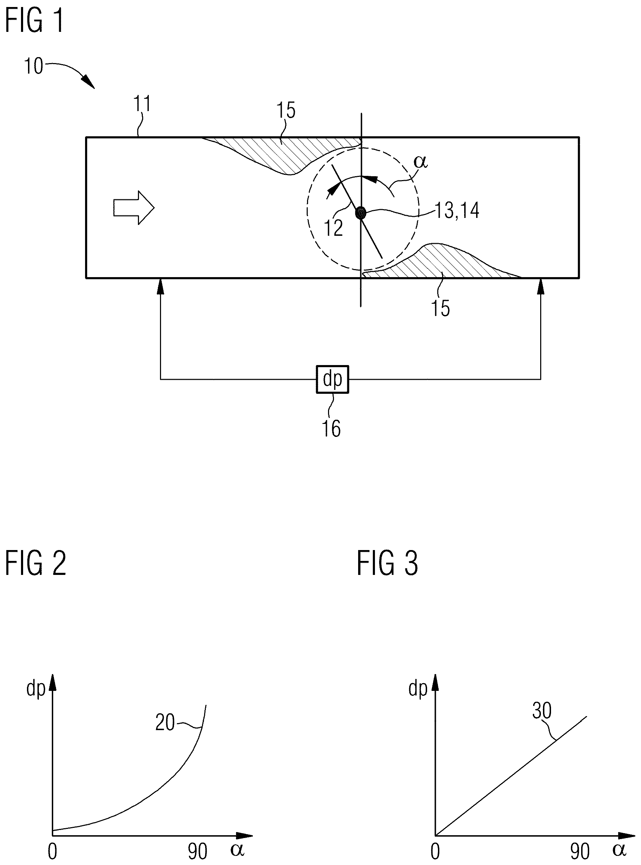

Die Fig. 1 zeigt eine schematische Darstellung einer erfindungsgemäßen Luftklappenvorrichtung 10 zur Einstellung einer Luftmenge in einem Luftkanal 11, vorzugsweise eines Klimatisierungssystems 2 eines spurgeführten Fahrzeugs 1 des Personentransports.

Die Luftklappenvorrichtung 10 umfasst eine innerhalb des Luftkanals 11 angeordnete drehbare Klappe 12, die um eine Drehachse 13 schwenkbar gelagert ist. Ein Stellantrieb 14, beispielsweise ein Klappenantrieb, ist mit der Klappe 12 verbunden und dient zum präzisen Einstellen eines Öffnungswinkels α der Klappe 12.

Um eine lineare Kennlinie zwischen dem Öffnungswinkel α der Klappe 12 und der resultierenden Luftmenge zu erzeugen, umfasst die Luftklappenvorrichtung 10 mehrere Strömungselemente 15 zum Beeinflussen des Strömungsverhaltens, die im Luftkanal 11 ausgebildet sind. Diese Strömungselemente 15 können sowohl stromaufwärts als auch stromabwärts der Klappe 12 positioniert sein und dienen zur gezielten Beeinflussung des Strömungsverhaltens der Luft im Bereich der Klappe 12.

Die Fig. 2 zeigt ein Diagramm, das eine konventionelle nichtlineare Klappenkennlinie 20 darstellt. Die x-Achse repräsentiert den Öffnungswinkel α der Klappe in Grad, während die y-Achse den Differenzdruck dp darstellt, der proportional zur durchfließenden Luftmenge ist. Wie aus dem Diagramm ersichtlich ist, weist die konventionelle Kennlinie 20 einen stark nichtlinearen Verlauf auf. Bei kleinen Öffnungswinkeln führen bereits geringe Änderungen des Winkels zu erheblichen Änderungen des Differenzdrucks und damit der Luftmenge, während bei größeren Öffnungswinkeln die Änderungen des Differenzdrucks deutlich geringer ausfallen.

Im Gegensatz dazu zeigt die Fig. 3 ein Diagramm mit der erfindungsgemäßen optimierten linearen Klappenkennlinie 30. Hier ist ein nahezu linearer Zusammenhang zwischen dem Öffnungswinkel α und dem Differenzdruck dp zu erkennen. Diese Linearität wird durch die spezielle Anordnung und Ausgestaltung der Strömungselemente 15 erreicht, die das Strömungsverhalten der Luft im Bereich der Klappe 12 gezielt beeinflussen.

Die Strömungselemente 15 können unterschiedlich ausgeführt sein. In einer ersten Ausführungsform (vgl. Fig.1) sind die Strömungselemente 15 als eine Mehrzahl von Strömungsleitbauteilen 15a ausgebildet, die in einem vorbestimmten Abstand zur Klappe 12 angeordnet sind.

Diese Strömungsleitbauteile 15a können unterschiedliche Formen, Größen und/oder Abstände zueinander aufweisen, die vorzugsweise basierend auf Strömungssimulationen oder empirischen Tests optimiert wurden, um die gewünschte lineare Kennlinie zu erzielen.

In einer weiteren Ausführungsform (nicht gezeigt) sind die Strömungselemente 15 als strukturierte Oberflächenelemente ausgebildet, die an der Innenwand des Luftkanals 11 angebracht sind. Diese strukturierten Oberflächenelemente erzeugen gezielte Verwirbelungen oder Strömungsführungen, die zur Linearisierung der Kennlinie beitragen.

In einer weiteren Ausführungsform (nicht gezeigt) weist die Klappe 12 und/oder das Strömungselement eine gegenüber dem Luftkanal 11 modifizierte Oberflächenkontur auf, die zur Erzeugung der linearen Kennlinie ausgebildet ist. Diese kann beispielsweise aus speziellen Profilierungen oder aerodynamischen Strukturen auf der Oberfläche der Klappe 12 bestehen.

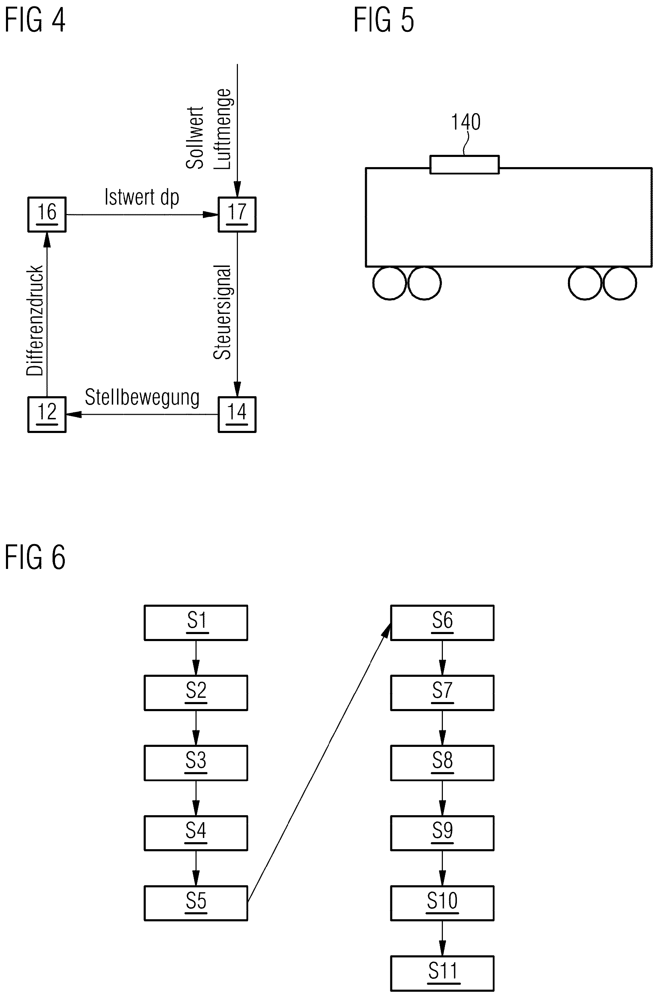

Die Fig. 4 zeigt ein Blockdiagramm eines Regelungskreises zur Steuerung der erfindungsgemäßen Luftklappenvorrichtung 10. Der Regelungskreis umfasst eine Steuerungseinheit 17, die konfiguriert ist, den Öffnungswinkel α der Klappe 12 einzustellen, und optional einen Drucksensor 16 zur Erfassung eines Differenzdrucks über die Klappe 12. Die Steuerungseinheit 17 ist vorzugsweise konfiguriert, den Öffnungswinkel α der Klappe 12 in Abhängigkeit vom erfassten Differenzdruck einzustellen.

Die Steuerungseinheit 17 ist konfiguriert, eine Selbstkalibrierungsroutine durchzuführen, um die tatsächliche Kennlinie der spezifischen Luftklappenvorrichtung 10 zu erfassen und den Stellantrieb 14 entsprechend anzusteuern. Diese Kalibrierung berücksichtigt eventuelle fertigungsbedingte Abweichungen und gewährleistet eine präzise Regelung auch bei vorhandenen Toleranzen des Stellantriebs 14.

In einer Ausführungsform umfasst das mindestens eine Strömungselement 15 ein Element, vorzugsweise ein verformbares Element, dessen Geometrie zur dynamischen Anpassung der Kennlinie während des Betriebs veränderbar ist. Diese verformbaren Elemente können beispielsweise durch kleine Stellmotoren oder magnetische Aktuatoren angesteuert werden und ermöglichen eine kontinuierliche Optimierung der Kennlinie unter verschiedenen Betriebsbedingungen.

Die Fig. 5 zeigt eine schematische Darstellung eines spurgeführten Fahrzeugs 1 des Personentransports 1, das mit dem Klimatisierungssystem 2 ausgestattet ist.

Die präzise Luftmengenregelung durch die erfindungsgemäße Luftklappenvorrichtung 10 trägt zum Komfort der Passagiere bei und optimiert gleichzeitig den Energieverbrauch des Klimatisierungssystems.

Das Klimatisierungssystems 2 umfasst mindestens eine erfindungsgemäße Luftklappenvorrichtung 10. Das Klimatisierungssystem ist für die Anwendung in einem spurgeführten Fahrzeug 1 des Personentransports optimiert und umfasst neben der Luftklappenvorrichtung 10 weitere Komponenten, wie Wärmetauscher, Lüfter, Filter und Steuereinheiten. Die Integration der erfindungsgemäßen Luftklappenvorrichtung 10 ermöglicht eine präzise Regelung der Luftströme und damit eine optimierte Klimatisierung der Fahrgasträume.

Fig. 6 zeigt exemplarisches Flussdiagramm des erfindungsgemäßen Verfahrens zur Einstellung einer Luftmenge in einem Luftkanal, vorzugsweise eines Klimatisierungssystems 2 eines spurgeführten Fahrzeugs 1 des Personentransports.

Das erfindungsgemäße Verfahren zur Einstellung einer Luftmenge in einem Luftkanal 11, vorzugsweise eines Klimatisierungssystems eines spurgeführten Fahrzeugs 19 des Personentransports, umfasst die Schritte des Erfassens eines Sollwerts für eine einzustellende Luftmenge S1, des Berechnens eines erforderlichen Öffnungswinkels unter Berücksichtigung der linearen Kennlinie S2, des Einstellens eines Öffnungswinkels α einer innerhalb des Luftkanals 11 angeordneten drehbaren Klappe 12 mittels eines Stellantriebs 14 S3, und des Beeinflussens des Strömungsverhaltens der Luft im Bereich der Klappe 12 durch mindestens ein im Luftkanal 11 ausgebildetes Strömungselement 15 S4, sodass eine im Wesentlichen lineare Kennlinie 30 zwischen dem Öffnungswinkel α der Klappe 12 und der resultierenden Luftmenge über einen vorbestimmten Winkelbereich des Öffnungswinkels α ausgebildet wird S5.

Das Beeinflussen des Strömungsverhaltens S4 kann dabei mittels mindestens eines Strömungselements 15 erfolgen, das als zumindest ein Strömungsleitbauteil 15a ausgebildet ist, das in einem vorbestimmten Abstand zur Klappe 12 angeordnet ist. Diese Strömungsleitbauteile 15a können unterschiedliche Formen, Größen und/oder Abstände zueinander aufweisen, die vorzugsweise auf Basis von Strömungssimulationen oder empirischen Tests zur Erzielung der linearen Kennlinie 30 optimiert sind.

Alternativ oder zusätzlich kann das Beeinflussen des Strömungsverhaltens S4 mittels des mindestens einen Strömungselements 15 durch ein als strukturiertes Oberflächenelement 15b ausgebildetes Element erfolgen, das an der Innenwand des Luftkanals 11 angebracht ist, oder mittels der Klappe 12 und/oder des Strömungselements 15, die eine gegenüber dem Luftkanal 11 modifizierte Oberflächenkontur 15c aufweisen, die zur Erzeugung der linearen Kennlinie 30 ausgebildet ist.

Das Verfahren kann ferner einen Schritt des Konfigurierens des mindestens einen Strömungselements 15 umfassen S6, um die Linearität der Kennlinie 30 an unterschiedliche Betriebsbedingungen anzupassen, sowie das Steuern des Öffnungswinkels α der Klappe 12 mittels einer Steuerungseinheit 17 und/oder das Erfassen eines Differenzdrucks dp über die Klappe 12 mittels eines Drucksensors 16 S7, wobei vorzugsweise der Öffnungswinkel α der Klappe 12 in Abhängigkeit vom erfassten Differenzdruck dp eingestellt wird S8.

In einer erweiterten Ausführungsform kann das Verfahren einen Schritt des Durchführens einer Selbstkalibrierungsroutine mittels der Steuerungseinheit 17 umfassen S9, um die tatsächliche Kennlinie zu erfassen S10 und den Stellantrieb 14 entsprechend einzustellen S11, sowie das Beeinflussen des Strömungsverhaltens mittels des mindestens einen Strömungselements 15 durch ein Element, vorzugsweise ein verformbares Element, dessen Geometrie zur dynamischen Anpassung der Kennlinie 30 während des Betriebs veränderbar ist S12.

Weiterhin umfasst die Erfindung ein einen digitalen Zwilling (nicht dargestellt) der Luftklappenvorrichtung 10, des Klimatisierungssystems und/oder des spurgeführten Fahrzeugs 1. Der digitale Zwilling umfasst ein digitales Modell der Luftklappenvorrichtung 10, ein digitales Modell des Klimatisierungssystems und ein digitales Modell des spurgeführten Fahrzeugs 1. Der digitale Zwilling ist mit einer Simulationseinheit ausgestattet, die Strömungssimulationen durchführen kann, um die Auswirkungen von Änderungen an der Geometrie, Position oder Konfiguration des mindestens einen Strömungselements 15 auf die Linearität der Kennlinie zu analysieren. Weiterhin umfasst der digitale Zwilling eine Optimierungseinheit, die basierend auf den Simulationsergebnissen eine optimale Konfiguration des mindestens einen Strömungselements 15 bestimmen kann.

Das erfindungsgemäße Computerprogrammprodukt mit Programmcode, der auf einem computerlesbaren Medium gespeichert ist, führt bei Ausführung auf mindestens einem Prozessor das beschriebene Verfahren aus. Ebenso stellt das computerlesbare Medium mit dem darauf gespeicherten Computerprogrammprodukt eine technische Implementierung des erfindungsgemäßen Verfahrens dar.

Die erfindungsgemäße Lösung bietet gegenüber dem Stand der Technik den entscheidenden Vorteil einer präziseren und reproduzierbareren Regelung der Luftmenge über den gesamten Betriebsbereich der Klappe. Dies führt zu einer verbesserten Effizienz und potenziell reduzierten Betriebskosten, da die Steuerung genauer und zuverlässiger ist. Insbesondere werden die negativen Auswirkungen von Stellmotortoleranzen minimiert, da ein lineares Ansprechverhalten über den gesamten Arbeitsbereich gewährleistet ist. Diese Vorteile sind besonders bedeutsam für Klimatisierungssysteme spurgeführter Fahrzeuge 1 des Personentransports, wo Komfort und Energieeffizienz wichtige Faktoren sind.

*Unabhängig vom grammatikalischen Geschlecht eines bestimmten Begriffes sind Personen mit männlicher, weiblicher oder anderer Geschlechteridentität mit umfasst.*

## Patentansprüche

1. Luftklappenvorrichtung (10) zur Einstellung einer Luftmenge in einem Luftkanal (11), vorzugsweise eines Klimatisierungssystems (2) eines spurgeführten Fahrzeugs (1) des Personentransports, umfassend:
∘ eine innerhalb des Luftkanals (11) angeordnete drehbare Klappe (12);
∘ einen Stellantrieb (14) zum Einstellen eines Öffnungswinkels (α) der Klappe (12); und
∘ mindestens ein Strömungselement (15) zum Beeinflussen des Strömungsverhaltens, welches derart im Luftkanal (11) ausgebildet ist, dass eine im Wesentlichen lineare Kennlinie zwischen dem Öffnungswinkel (α) der Klappe (12) und der resultierenden Luftmenge über einen vorbestimmten Winkelbereich des Öffnungswinkels (α) ausgebildet ist.

2. Luftklappenvorrichtung (10) nach Anspruch 1,
wobei das mindestens eine Strömungselement (15) zumindest ein Strömungsleitbauteil (15a) umfasst, das in einem vorbestimmten Abstand zur Klappe (12) angeordnet ist.

3. Luftklappenvorrichtung (10) nach Anspruch 2,
wobei das zumindest eine Strömungsleitbauteil (15a), vorzugsweise die mehreren Strömungsleitbauteile (15a), unterschiedliche Formen, Größen und/oder Abstände zueinander aufweisen, die vorzugsweise auf Basis von Strömungssimulationen oder empirischen Tests zur Erzielung der linearen Kennlinie optimiert sind.

4. Luftklappenvorrichtung (10) nach einem der Ansprüche 1 bis 3,
wobei das mindestens eine Strömungselement (15) als ein strukturiertes Oberflächenelement (15b) ausgebildet ist, das an der Innenwand des Luftkanals (11) angebracht ist.

5. Luftklappenvorrichtung (10) nach einem der Ansprüche 1 bis 4,
wobei die Klappe (12) und/oder das Strömungselement eine gegenüber dem Luftkanal (11) modifizierte Oberflächenkontur (15c) aufweist, die zur Erzeugung der linearen **Kennlinie** ausgebildet ist.

6. Luftklappenvorrichtung (10) nach einem der Ansprüche 1 bis 5,
wobei das mindestens eine Strömungselement (15) konfigurierbar ist, um die Linearität der Kennlinie an unterschiedliche Betriebsbedingungen anzupassen.

7. Luftklappenvorrichtung (10) nach einem der Ansprüche 1 bis 6, ferner umfassend:
∘ eine Steuerungseinheit (17), die konfiguriert ist, den Öffnungswinkel (α) der Klappe (12) einzustellen; und/oder
∘ einen Drucksensor (16) zur Erfassung eines Differenzdrucks über die Klappe (12), wobei vorzugsweise die Steuerungseinheit (17) konfiguriert ist, den Öffnungswinkel (α) der Klappe (12) in Abhängigkeit vom erfassten Differenzdruck einzustellen.

8. Luftklappenvorrichtung (10) nach Anspruch 7,
wobei die Steuerungseinheit (17) konfiguriert ist, eine Selbstkalibrierungsroutine durchzuführen, um die tatsächliche Kennlinie zu erfassen und den Stellantrieb (14) entsprechend einzustellen.

9. Luftklappenvorrichtung (10) nach einem der Ansprüche 1 bis 8,
wobei das mindestens eine Strömungselement (15) ein Element, vorzugsweise ein verformbares Element, umfasst, dessen Geometrie zur dynamischen Anpassung der Kennlinie während des Betriebs veränderbar ist.

10. Luftklappenvorrichtung (10) nach einem der Ansprüche 1 bis 9,
wobei das mindestens eine Strömungselement (15) stromaufwärts und/oder stromabwärts der Klappe (12) angeordnet ist.

11. Klimatisierungssystem (2), umfassend zumindest eine Luftklappenvorrichtung (10) nach einem der Ansprüche 1 bis 10.

12. Spurgeführtes Fahrzeug (1) des Personentransports, umfassend zumindest ein Luftklappenvorrichtung (10) nach einem der Ansprüche 1 bis 10 oder zumindest ein Klimatisierungssystem (2) nach Anspruch 11.

13. Verfahren zur Einstellung einer Luftmenge in einem Luftkanal (11), vorzugsweise eines Klimatisierungssystems (2) eines spurgeführten Fahrzeugs (1) des Personentransports, umfassend die folgenden Schritte:
∘ Einstellen eines Öffnungswinkels (α) einer innerhalb des Luftkanals (11) angeordneten drehbaren Klappe (12) mittels eines Stellantriebs (14); und
∘ Beeinflussen des Strömungsverhaltens der Luft im Bereich der Klappe (12) durch mindestens ein im Luftkanal (11) ausgebildetes Strömungselement (15), sodass eine im Wesentlichen lineare Kennlinie zwischen dem Öffnungswinkel (α) der Klappe (12) und der resultierenden Luftmenge über einen vorbestimmten Winkelbereich des Öffnungswinkels (α) ausgebildet wird.

14. Verfahren nach Anspruch 13,
wobei das Beeinflussen des Strömungsverhaltens mittels des mindestens einen Strömungselements (15) durch zumindest ein Strömungsleitbauteil (15a) erfolgt, das in einem vorbestimmten Abstand zur Klappe (12) angeordnet ist.

15. Verfahren nach Anspruch 14,
wobei das zumindest eine Strömungsleitbauteil (15a), vorzugsweise die mehreren Strömungsleitbauteile (15a), unterschiedliche Formen, Größen und/oder Abstände zueinander aufweisen, die vorzugsweise auf Basis von Strömungssimulationen oder empirischen Tests zur Erzielung der linearen Kennlinie optimiert sind.

16. Verfahren nach einem der Ansprüche 13 bis 15,
wobei das Beeinflussen des Strömungsverhaltens mittels des mindestens einen Strömungselements (15) durch ein als strukturiertes Oberflächenelement (15b) ausgebildetes Element erfolgt, das an der Innenwand des Luftkanals (11) angebracht ist.

17. Verfahren nach einem der Ansprüche 13 bis 16,
wobei das Beeinflussen des Strömungsverhaltens mittels der Klappe (12) und/oder des Strömungselements erfolgt, die eine gegenüber dem Luftkanal (11) modifizierte **Oberflächenkontur** (15c) aufweisen, die zur Erzeugung der linearen Kennlinie ausgebildet ist.

18. Verfahren nach einem der Ansprüche 13 bis 17,
ferner umfassend einen Schritt des Konfigurierens des mindestens einen Strömungselements (15), um die Linearität der Kennlinie an unterschiedliche Betriebsbedingungen anzupassen.

19. Verfahren nach einem der Ansprüche 13 bis 18,
ferner umfassend:
∘ Steuern des Öffnungswinkels (α) der Klappe (12) mittels einer Steuerungseinheit (17); und/oder
∘ Erfassen eines Differenzdrucks über die Klappe (12) mittels eines Drucksensors (16), wobei vorzugsweise der Öffnungswinkel (α) der Klappe (12) in Abhängigkeit vom erfassten Differenzdruck eingestellt wird.

20. Verfahren nach Anspruch 19,
ferner umfassend einen Schritt des Durchführens einer Selbstkalibrierungsroutine mittels der Steuerungseinheit (17), um die tatsächliche Kennlinie zu erfassen und den Stellantrieb (14) entsprechend einzustellen.

21. Verfahren nach einem der Ansprüche 13 bis 20,
wobei das Beeinflussen des Strömungsverhaltens mittels des mindestens einen Strömungselements (15) durch ein Element erfolgt, vorzugsweise ein verformbares Element, dessen Geometrie zur dynamischen Anpassung der Kennlinie während des Betriebs veränderbar ist.

22. Verfahren nach einem der Ansprüche 13 bis 21,
wobei das Beeinflussen des Strömungsverhaltens mittels des mindestens einen Strömungselements (15) stromaufwärts und/oder stromabwärts der Klappe (12) erfolgt.

23. Computerprogrammprodukt mit Programmcode, der auf einem computerlesbaren Medium gespeichert ist und der, wenn er auf mindestens einem Prozessor ausgeführt wird, das Verfahren nach einem der Ansprüche 13 bis 22 ausführt.

24. Computerlesbares Medium mit einem darauf gespeicherten Computerprogrammprodukt, welches Programmcode umfasst, der bei Ausführung durch mindestens einen Prozessor veranlasst das Verfahren nach einem der Ansprüche 13 bis 22 auszuführen.

25. Digitaler Zwilling einer Luftklappenvorrichtung (10) zur Einstellung einer Luftmenge in einem Luftkanal (11), eines Klimatisierungssystems (2) und/oder eines spurgeführten Fahrzeugs (1), wobei der digitale Zwilling zumindest ein digitales Modell der Luftklappenvorrichtung (10) nach einem der Ansprüche 1 bis 10 und/oder ein Modell des Klimatisierungssystems (2) nach Anspruch 11 und/oder ein Modell des spurgeführten Fahrzeugs (1) nach Anspruch 12 umfasst.

26. Digitaler Zwilling nach Anspruch 25, **dadurch gekennzeichnet, dass** der digitale Zwilling umfasst:
ein digitales Modell einer innerhalb des Luftkanals (11) angeordneten drehbaren Klappe (12);
ein digitales Modell eines Stellantriebs (14) zum Einstellen eines Öffnungswinkels (α) der Klappe (12);
ein digitales Modell von mindestens einem Strömungselement (15), welches derart im digitalen Modell des Luftkanals (11) angeordnet ist, dass eine im Wesentlichen lineare Kennlinie zwischen dem Öffnungswinkel (α) der Klappe (12) und der resultierenden Luftmenge über einen vorbestimmten Winkelbereich des Öffnungswinkels (α) simuliert wird.

27. Digitaler Zwilling nach Anspruch 25 oder 26, **dadurch gekennzeichnet, dass** der digitale Zwilling umfasst:
eine Simulationseinheit, die konfiguriert ist, Strömungssimulationen durchzuführen, um die Auswirkungen von Änderungen an der Geometrie, Position oder Konfiguration des mindestens einen Strömungselements (15) auf die Linearität der Kennlinie zu analysieren; und/oder
eine Optimierungseinheit, die konfiguriert ist, basierend auf den Simulationsergebnissen eine optimale Konfiguration des mindestens einen Strömungselements (15) zu bestimmen, um die lineare Kennlinie für unterschiedliche Betriebsbedingungen zu maximieren und Ergebnisse zur Verwendung bei der physischen Implementierung der Luftklappenvorrichtung (10) bereitzustellen.
